(19) Europäisches Patentamt / European Patent Office / Office européen des brevets

(11) **EP 3 492 167 B1**

(12) **EUROPEAN PATENT SPECIFICATION**

(45) Date of publication and mention
of the grant of the patent:
**29.06.2022 Bulletin 2022/26**

(21) Application number: **17834514.6**

(22) Date of filing: **28.07.2017**

(51) International Patent Classification (IPC):
**B01J 23/46** (2006.01)    **B01D 53/86** (2006.01)
**B01J 21/06** (2006.01)    **B01J 21/08** (2006.01)
**B01J 37/18** (2006.01)    **B01J 37/16** (2006.01)
**B01J 35/00** (2006.01)    **B01J 35/10** (2006.01)
**B01J 35/04** (2006.01)    **B01J 37/02** (2006.01)
**B01J 37/08** (2006.01)

(52) Cooperative Patent Classification (CPC):
**B01D 53/8628; B01J 21/063; B01J 21/08;
B01J 23/468; B01J 35/0013; B01J 35/006;
B01J 35/04; B01J 35/1009; B01J 35/1014;
B01J 37/0213; B01J 37/0215; B01J 37/088;
B01J 37/16; B01J 37/18;** B01D 2251/204;   (Cont.)

(86) International application number:
**PCT/JP2017/027374**

(87) International publication number:
**WO 2018/021512 (01.02.2018 Gazette 2018/05)**

(54) **EXHAUST GAS TREATMENT CATALYST, METHOD FOR PRODUCING EXHAUST GAS TREATMENT CATALYST, AND EXHAUST GAS TREATMENT SYSTEM**

ABGASBEHANDLUNGSKATALYSATOR, VERFAHREN ZUR HERSTELLUNG DES ABGASBEHANDLUNGSKATALYSATORS UND ABGASBEHANDLUNGSSYSTEM

CATALYSEUR DE TRAITEMENT DE GAZ D'ÉCHAPPEMENT, PROCÉDÉ DE PRODUCTION DE CATALYSEUR DE TRAITEMENT DE GAZ D'ÉCHAPPEMENT ET SYSTÈME DE TRAITEMENT DE GAZ D'ÉCHAPPEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.07.2016 JP 2016150470**

(43) Date of publication of application:
**05.06.2019 Bulletin 2019/23**

(60) Divisional application:
**21184201.8 / 3 909 677**

(73) Proprietor: **Mitsubishi Power, Ltd.
Yokohama, Kanagawa 220-8401 (JP)**

(72) Inventors:
• **HIGASHINO, Koji**
  **Tokyo 108-8215 (JP)**
• **SAWATA, Akihiro**
  **Tokyo 108-8215 (JP)**
• **YASUTAKE, Toshinobu**
  **Tokyo 108-8215 (JP)**
• **YONEMURA, Masanao**
  **Tokyo 108-8215 (JP)**
• **NOCHI, Katsumi**
  **Tokyo 108-8215 (JP)**
• **KUBOTA, Takafumi**
  **Tokyo 108-8215 (JP)**
• **MASUDA, Tomotsugu**
  **Yokohama-shi**
  **Kanagawa 220-8401 (JP)**
• **ISOBE, Tomoaki**
  **Yokohama-shi**
  **Kanagawa 220-8401 (JP)**

EP 3 492 167 B1

(74) Representative: **Henkel & Partner mbB**
**Patentanwaltskanzlei, Rechtsanwaltskanzlei**
**Maximiliansplatz 21**
**80333 München (DE)**

(56) References cited:
**WO-A1-2012/063466      JP-A- H 081 006**
**JP-A- 2000 300 961      JP-A- 2012 061 397**
**JP-B2- 5 598 421**

- **SHUANG LIU ET AL: "TiOpromoted**
  **Ir/AlOcatalysts for direct decomposition of NO",**
  **CATALYSIS TODAY, ELSEVIER, AMSTERDAM,**
  **NL, vol. 175, no. 1, 26 February 2011 (2011-02-26),**
  **pages 264-270, XP028390756, ISSN: 0920-5861,**
  **DOI: 10.1016/J.CATTOD.2011.02.053 [retrieved**
  **on 2011-03-09]**
- **SATO Y ET AL: "The water-gas-shift reaction over**
  **Ir/TiO"2 and Ir-Re/TiO"2 catalysts", APPLIED**
  **CATALYSIS A: GENERAL, ELSEVIER,**
  **AMSTERDAM, NL, vol. 304, 10 May 2006**
  **(2006-05-10), pages 78-85, XP025142256, ISSN:**
  **0926-860X, DOI: 10.1016/J.APCATA.2006.02.022**
  **[retrieved on 2006-05-10]**
- **INOMATA,H. et al.: "Selective reduction of NO**
  **with CO in the presence of 02 with Ir/ WO 3**
  **catalysts:Infuluence of preparation variables on**
  **the catalytic performance", Applied Catalysis B:**
  **Environmental, vol. 84, 2008, pages 783-789,**
  **XP025562343,**
- **SHIGERU NOJIMA et al.: "Selective Reduction**
  **Mechanism of NO x with Hydrocarbons over Ir**
  **Catalyst with Activation Treatment", Journal of**
  **the Chemical Society of Japan, 2000, pages**
  **389-396, XP9513336,**
- **TAYLOR, C. KATHLEEN et al.: "Selective**
  **Reduction of Nitric Oxide over Noble Metals",**
  **Journal of Catalysis, vol. 63, 1980, pages 53-71,**
  **XP002118104,**

(52) Cooperative Patent Classification (CPC): (Cont.)
B01D 2255/1028; B01D 2255/9202;
B01D 2255/9207; Y02C 20/10

**Description**

Technical Field

The present invention relates to an exhaust gas treatment catalyst, a method for producing an exhaust gas treatment catalyst, and an exhaust gas treatment system and particularly to an exhaust gas treatment catalyst that uses carbon monoxide (CO) in an exhaust gas generated in a sintering furnace as a reducing agent or a fuel for heating, a method for producing an exhaust gas treatment catalyst, and an exhaust gas treatment system.

Background Art

In the related art, as a method for treating an exhaust gas generated from a sintering furnace in an iron-making plant or the like, a technique of reducing and denitrating nitrogen monoxide (NO) on a denitration catalyst using ammonia ($NH_3$) as a reducing agent is known. In addition, in the case of denitration using ammonia as a reducing agent, it is necessary to separately use a facility for adding ammonia or a fuel for heating for increasing a reaction temperature of the denitration. Therefore, a denitration method in which Co is used as a reducing agent and a fuel for heating has been used. In addition, a method for reducing the fuel for heating using an amount of heat generated by oxidation of CO also has been used.

As a catalyst that is used in the above-described denitration method, a catalyst in which iridium (Ir), potassium (K), and tin (Sn) are dispersed in and supported by a carrier having a low specific surface area which is made of silicon carbide (SiC) and a crystallite diameter of iridium is set in a range of 2 to 100 nm is known (for example, PTL 1). In addition, as a catalyst using an amount of heat generated by oxidation of CO, a catalyst in which platinum (Pt) is supported by a carrier that is a monoxide of one or more selected from the group consisting of titanium dioxide ($TiO_2$) and zirconium dioxide ($ZrO_2$) or a complex oxide thereof is known (for example, PTL 2). PTL 3 discloses a method for NOx reduction using CO and a catalyst comprising iridium on a support.

Citation List

Patent Literature

[PTL 1] Japanese Unexamined Patent Application Publication No. 8-309186
[PTL 2] Japanese Unexamined Patent Application Publication No. 2005-270821
[PTL 3] JP 2012-61397 A

Summary of Invention

However, in the above-described examples, in the case of denitrating an exhaust gas using CO as a reducing agent, there is a problem in that a CO denitration reaction that converts NO to nitrogen ($N_2$) using CO and a CO oxidation reaction in which CO is oxidized to $CO_2$ selectively progress as described in Expressions (i) and (ii) and thus a desired NO conversion rate cannot be obtained. In addition, in the case of oxidizing CO in an exhaust gas using a catalyst, there is a problem in that a desired CO oxidation rate cannot be obtained.

$$2CO+2NO \rightarrow N_2+2CO_2 \cdots \qquad (i)$$

$$2CO+O_2 \rightarrow 2CO_2 \cdots \qquad (ii)$$

In consideration of the above-described circumstance, an object of the present invention is to provide an exhaust gas treatment catalyst capable of improving a NO conversion rate in denitration using CO as a reducing agent and capable of improving a CO oxidation rate in an oxidation of CO in an exhaust gas, a method for producing an exhaust gas treatment catalyst, and an exhaust gas treatment system.

As a result of creative studies, the present inventors found that, when a specific surface area of an exhaust gas treatment catalyst that has been produced as a catalyst by supporting iridium by a carrier that is a metal oxide or a metal sulfoxide and a crystallite diameter of iridium in the catalyst are set to predetermined values, it is possible to improve performance of the catalyst such as a NO conversion rate and a CO oxidation rate and completed the present invention.

At least an aspect of the present invention is an exhaust gas treatment catalyst. An exhaust gas treatment catalyst according to the present invention is as described in claim 1.

Another aspect of the present invention is a method for producing an exhaust gas treatment catalyst. A method for producing an exhaust gas treatment catalyst according to the present invention is a method as described in claim 4.

Still another aspect of the present invention is an exhaust gas treatment system. An exhaust gas treatment system of the present invention is an exhaust gas treatment system as described in claim 9. Meanwhile, as the heating device, a duct burner is assumed, and a fuel is cokes oven gas (COG) emitted from the same iron-making plant.

Furthermore, far still another aspect of the present invention is an exhaust gas treatment system. The system is an exhaust gas treatment system according to claim 10.

According to the present invention, an exhaust gas treatment catalyst capable of improving a NO conversion rate in denitration using CO as a reducing agent and capable of improving a CO oxidation rate in the oxidation of CO in an exhaust gas, a method for producing an exhaust gas treatment catalyst, and an exhaust gas treatment system are provided.

Brief Description of Drawings

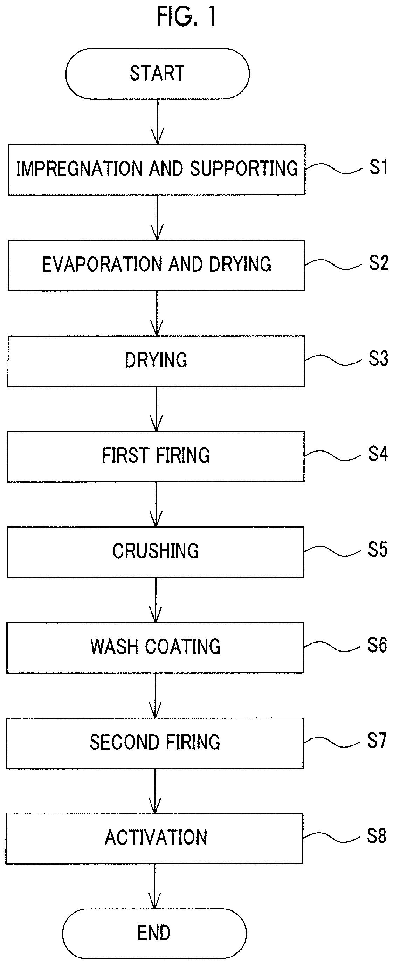

Fig. 1 is a flowchart illustrating a first embodiment of a method for producing an exhaust gas treatment catalyst according to the present invention.

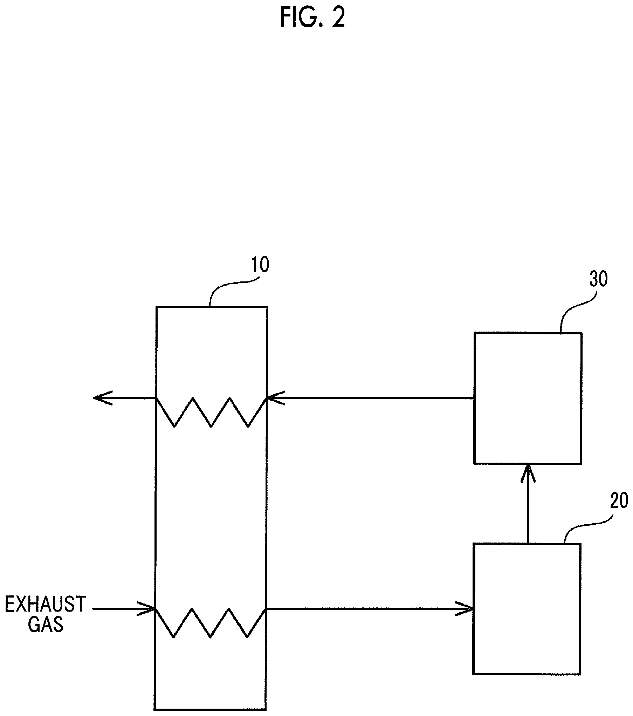

Fig. 2 is a schematic view schematically illustrating a constitution of a first embodiment of an exhaust gas treatment system according to the present invention.

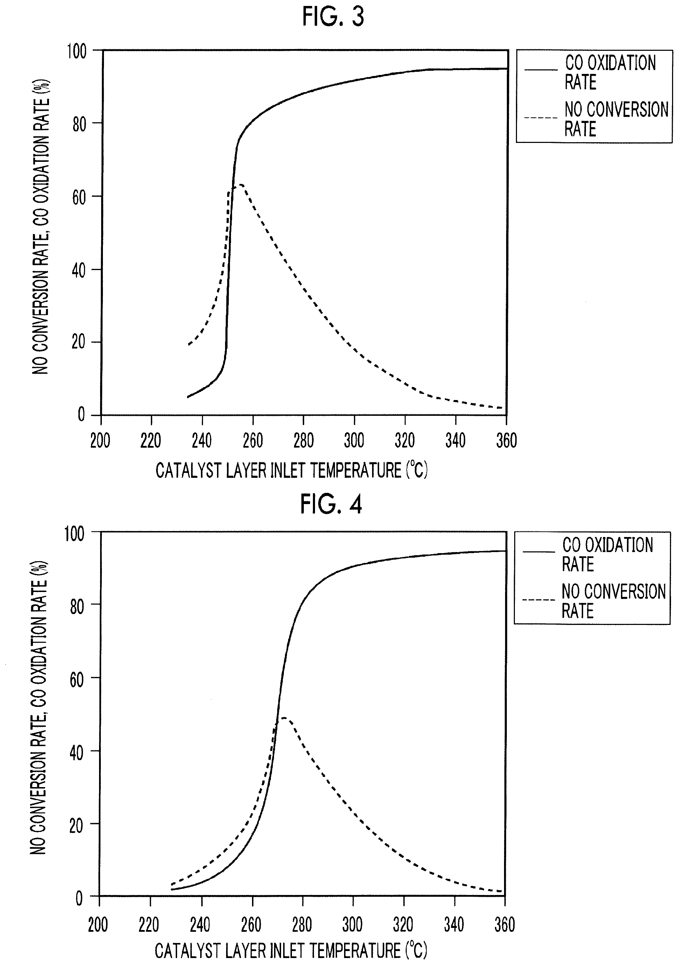

Fig. 3 is a graph illustrating a relationship between a CO oxidation rate and a NO conversion rate with respect to a catalyst layer inlet temperature of a test example regarding the exhaust gas treatment catalyst, the method for producing an exhaust gas treatment catalyst, and the exhaust gas treatment system according to the present invention.

Fig. 4 is a graph illustrating a relationship between a CO oxidation rate and a NO conversion rate with respect to a catalyst layer inlet temperature of a comparative example regarding the exhaust gas treatment catalyst, the method for producing an exhaust gas treatment catalyst, and the exhaust gas treatment system according to the present invention.

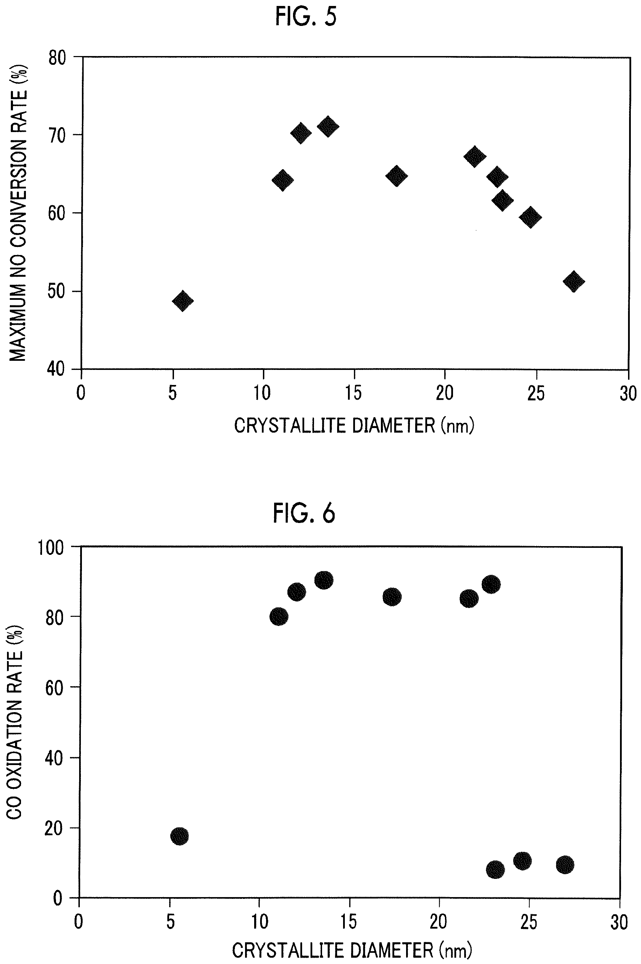

Fig. 5 is a graph illustrating a relationship between a crystallite diameter of iridium and a maximum NO conversion rate of the test example and the comparative example regarding the exhaust gas treatment catalyst, the method for producing an exhaust gas treatment catalyst, and the exhaust gas treatment system according to the present invention.

Fig. 6 is a graph illustrating a relationship between the crystallite diameter of iridium and a CO oxidation rate of the test example and the comparative example regarding the exhaust gas treatment catalyst, the method for producing an exhaust gas treatment catalyst, and the exhaust gas treatment system according to the present invention.

Description of Embodiments

Hereinafter, an embodiment of an exhaust gas treatment catalyst, a method for producing an exhaust gas treatment catalyst, and an exhaust gas treatment system according to the present invention will be described in detail with reference to drawings. Meanwhile, the present invention is not limited to the embodiment described below.

1. First embodiment

1.1 Exhaust gas treatment catalyst

A first embodiment of the exhaust gas treatment catalyst according to the present invention will be described. The exhaust gas treatment catalyst according to the present embodiment is a denitration catalyst for using CO in an exhaust gas generated by combustion in a sintering furnace of an iron-making plant (hereinafter, also referred to as the sintering furnace exhaust gas) as a reducing agent and a fuel for heating and includes a carrier and iridium (Ir) as an active metal.

In the sintering furnace exhaust gas that is a treatment subject of the exhaust gas treatment catalyst, CO that is a reducing gas is included in a high concentration of 4,000 to 20,000 ppm. Therefore, CO in the sintering furnace exhaust gas is used as a reducing agent of a denitration reaction, and CO that does not contribute to the denitration reaction is oxidized and combusted. Therefore, a denitration method in which CO is used to heat the sintering furnace exhaust gas becomes possible, and it is possible to significantly reduce a reducing agent and a fuel cost. The concentration of CO in the sintering furnace exhaust gas is preferably 6,000 ppm or more. When the concentration is 6,000 ppm or more, it is possible to improve the NO conversion rate by efficiently using CO in the sintering furnace exhaust gas.

The carrier in the exhaust gas treatment catalyst is titanium dioxide ($TiO_2$) or silicon dioxide ($SiO_2$).

The specific surface area of the exhaust gas treatment catalyst needs to be an area in which the metallic iridium can be supported. More specifically, a lower limit value of the specific surface area of the exhaust gas treatment catalyst is preferably set to 0.5 $m^2$/g or more and is preferably 12 $m^2$/g or more. When the specific surface area of the exhaust gas treatment catalyst is less than 0.5 $m^2$/g, there is a concern that denitration performance may significantly degrade. In addition, an upper limit value of the specific surface area of the exhaust gas treatment catalyst is set to 100 $m^2$/g or less and is preferably 90 $m^2$/g or less and more preferably 20 $m^2$/g or less. The specific surface area of the exhaust gas treatment catalyst is a BET specific surface area calculated using a BET method.

A crystallite diameter of the metallic iridium in the catalyst is 12 nm or more and 23 nm or less. When the crystallite diameter of the metallic iridium exceeds 30 nm, there is a concern that a reactivity of the denitration reaction may degrade. An amount of the metallic iridium supported by the carrier needs to be an amount at which the crystallite diameter of the metallic iridium is in the above-described range and can be set to, for example 0.25% to 2% by weight of the carrier.

As described above, when the specific surface area of the exhaust gas treatment catalyst is set in a predetermined range, and the crystallite diameter of the metallic iridium in the exhaust gas treatment catalyst is set in a predetermined range, it is possible to achieve a NO conversion rate of 60% or more in denitration using CO as a reducing agent.

1.2. Method for producing exhaust gas treatment catalyst

An embodiment of a method for producing the exhaust gas treatment catalyst having the above-described constitution will be described. Fig. 1 illustrates a method for producing an exhaust gas treatment catalyst according to the present embodiment in a flowchart. As illustrated in Fig. 1, the method for producing an exhaust gas treatment catalyst includes at least an impregnation and supporting step, a firing step (first and second firing steps), and an activation step.

First, in the impregnation and supporting step, an iridium aqueous solution containing at least an iridium element is impregnated into a carrier having a predetermined specific surface area, thereby impregnating a surface of the carrier (S1) with an iridium compound to be supported thereby. The specific surface area of the carrier is a BET specific surface area calculated using a BET method.

In the impregnation and supporting step, an upper limit value of the specific surface area of the carrier needs to be $m^2$/g or less. In addition, a lower limit value of the specific surface area of the carrier needs to be 14 $m^2$/g or more. When the specific surface area of the carrier is less than 0.5 $m^2$/g, there is a concern that the denitration performance may significantly degrade. When the specific surface area of the carrier is in the above-described range, it is possible to preferably grow the crystallite diameter of iridium and improve the NO conversion rate in denitration using CO as a reducing agent.

Next, the carrier is treated at a predetermined temperature for a predetermined time, thereby evaporating moisture in the carrier and drying the carrier (S2). The dried carrier is dried in the air at a predetermined temperature for a predetermined time (S3), thereby obtaining a catalyst supporting the iridium compound. The temperature and the time during the evaporation and drying the carrier need to be a temperature and a time at which the carrier can be dried and can be set to, for example, a temperature of 140°C and three hours. In addition, the temperature and the time during the drying of the dried catalyst need to be a temperature and a time at which the carrier can be sufficiently dried and can be set to, for example, a temperature of 110°C and 12 hours.

The iridium aqueous solution that is used in the impregnation and supporting step needs to be an aqueous solution in which iridium can be impregnated into and supported by the carrier by means of immersion, and examples thereof include an iridium (III) chloride solution ($H_3IrCl_6$), an iridium (II) chloride solution ($H_2IrCl_6$), a sodium hexachloride iridate (III) solution ($Na_3IrCl_6$), a sodium hexachloride iridate (II) solution ($Na_2IrCl_6$), a sodium hexabromo iridate (III) solution ($Na_2IrBr_6$), a haxaammineiridium (III) chloride solution ($Ir(NH_3)_6Cl_3$), a haxaammineiridium (III) hydroxide solution ($Ir(NH_3)_6(OH)_3$), a haxaammineiridium (III) nitrate solution ($Ir(NH_3)_6(NO_3)_3$), and the like. Among these, practically, an iridium (II) chloride solution is preferred.

As the carrier in the catalyst that is used in the impregnation and supporting step, it is possible to preferably employ the above-described carrier in the denitration catalyst according to the present embodiment.

In the first firing step, the dried carrier is heated to a predetermined temperature for a predetermined time, whereby an iridium salt on the surface of the carrier is decomposed and oxidized, and a powder-form catalyst in which iridium oxide is supported as an active metal is obtained (S4).

A firing temperature in the first firing step can be set to, for example, 400°C or higher and 1,000°C or lower and is preferably 500°C or higher and 800°C or lower. In addition, a firing time in the firing step is preferably set to three hours or longer and eight hours or shorter. In addition, a temperature-increase rate in the first firing step also varies depending on the firing time and the firing temperature, but can be set to, for example, 100°C/h. When the temperature, the time, and the temperature-increase rate in the first firing step are in the above-described ranges, it is possible to preferably grow the crystallite diameter of iridium in the denitration catalyst and improve the NO conversion rate in denitration using CO as a reducing agent.

Next, water ($H_2O$) is added to the powder-form catalyst in a wet-type ball mill container, and the catalyst is crushed under predetermined conditions, thereby obtaining a slurry for wash coating (S5). The crushing conditions with a wet-type ball mill can be set to, for example, room temperature, eight hours, and a rotation speed of 100 rpm.

Next, the slurry is moved to another container provided with a stirrer, a honeycomb-shaped monolith base material is immersed in the slurry to carry out wash coating, a surplus slurry is blown away as necessary, and the monolith base material is dried at a predetermined temperature for a predetermined time (S6). Examples of the monolith base material include ceramic monolith base materials such as cordierite, titanium oxide monolith base materials, and the like. A coating amount can be set to, for example, 100 $g/m^2$ or less. A drying temperature and a time in the drying step need to be a temperature and a time at which the carrier can be sufficiently dried and can be set to, for example, a temperature of 120°C for two hours.

In the second firing step, the honeycomb-shaped catalyst is heated and fired at a predetermined temperature for a predetermined time (S7). A firing temperature in the second firing step can be set to, for example, 400°C or higher and 1,000°C or lower and is preferably 500°C or higher and 800°C or lower. A firing time in the firing step is preferably three hours or longer and eight hours or shorter. In addition, a temperature-increase rate in the second firing step also varies depending on the firing time and the firing temperature, but can be set to, for example, 100°C/h.

In the activation step, the catalyst supporting iridium is heated at a predetermined temperature for a predetermined time using a reducing gas, whereby iridium oxide in the catalyst is reduced to produce metallic iridium, and a catalyst in which the crystallite diameter of iridium is set in a predetermined range is obtained (S8).

A temperature in the activation step is 500°C or higher and 800°C or lower. In addition, a time in the activation step is 0.5 hours or longer and 50 hours or shorter. When the temperature and/or the time in the activation step are in the above-described ranges, it is possible to preferably grow the crystallite of iridium in the denitration catalyst and improve the NO conversion rate in denitration using CO as a reducing agent.

The reducing gas is hydrogen, carbon monoxide, or a gas mixture thereof. Regarding a concentration of the reducing gas in the activation step, for example, in a case in which hydrogen is used as the reducing gas, the concentration of the reducing gas is 4% by volume or less, and, in a case in which hydrogen monoxide is used as the reducing gas, the concentration of the reducing gas is 12.5% by volume or less. In addition, in a case in which a gas mixture of hydrogen and carbon monoxide is used as the reducing gas, the concentration thereof is equal to or less than a concentration obtained by further industrially applying a safety rate according to the Le Chatelier's principle depending on a mixing proportion. For example, as shown in the following expression, an upper limit value of a concentration L (% by volume) of a gas mixture is calculated from values of a percent by volume of hydrogen (n), a percent by volume of carbon monoxide (m) and the safety rate k (0.2 to 0.8). In addition, components other than what has been described above in the reducing gas, an inert component such as nitrogen ($N_2$) or argon (Ar) is exemplified.

$$L \leq 100 \div \left( \frac{n}{4} + \frac{m}{12.5} \right) \times k$$

The crystallite diameter of iridium can be measured using an X-ray diffraction method, an XPS method, an EXAFS method, a TEM method, or the like. In the invention, the crystallite diameter of iridium is calculated from a full width at half maximum of a diffraction peak obtained using an X-ray diffraction method using the Sherrer equation.

1.3. Exhaust gas treatment system

An embodiment of an exhaust gas treatment system to which the exhaust gas treatment catalyst produced using the above-described production method is applied will be described using Fig. 2. The exhaust gas treatment system according to the present embodiment is a system in which CO in the sintering furnace exhaust gas is used as a reducing agent and a fuel for heating. In the exhaust gas treatment system according to the present embodiment as well, the same sintering furnace exhaust gas as the above-described exhaust gas treatment catalyst according to the present embodiment can be preferably employed as a denitration subject. Meanwhile, in the present specification, the sintering furnace exhaust gas will also be referred to as the exhaust gas. In addition, expressions of upstream and downstream will be used along a circulation direction of the exhaust gas in the system.

As illustrated in Fig. 2, a denitration system according to the present embodiment includes at least a heating and heat recovery device 10, a heating device 20, and a denitration device 30.

The heating and heat recovery device 10 is a gas gas heater (GGH) provided upstream of the heating device 20 and downstream of the denitration device 30 along the flow of an exhaust gas. The heating and heat recovery device 10 is constituted so as to include at least one heat exchanger and a heat medium that circulates in the heating and heat recovery device, to heat an exhaust gas from a sintering furnace through heat exchange with the heat medium such as water, and to recover heat from an exhaust gas that has passed through the denitration device 30 using the heat medium. In addition, the heating and heat recovery device 10 is constituted so as to send an exhaust gas from which heat has been recovered downstream of a chimney or the like.

Upstream of the heating and heat recovery device 10, a dust precipitator and/or a desulfurization device, not illustrated, can be provided. The dust precipitator is an electrostatic precipitator (EP) or a bag filter installed in an existing plant. The dust precipitator is constituted so as to trap soot and dust in an exhaust gas using the electrostatic precipitator (EP) or the bag filter. In addition, the desulfurization device is a flue-gas desulfurization (FGD) that is, preferably, provided downstream of the dust precipitator and installed in an existing plant. A smoke exhaust and desulfurization device is a dry-type or wet-type desulfurization device. In the case of a dry-type desulfurization device, the desulfurization device is constituted so as to spray hydrated lime ($Ca(OH)_2$) or soda ($NaHCO_3$) as a desulfurization agent to the exhaust gas before trapping by the bag filter and absorb $SO_2$ in a surface deposition layer of the bag filter, thereby carrying out desulfurization. In the case of the wet-type desulfurization device, the desulfurization device is constituted so as to bring residual or reduced $SO_2$ in an exhaust gas into contact with a lime slurry formed by suspending lime stone ($CaCO_3$) in water, thereby absorbing and removing $SO_2$. In addition, the desulfurization device is constituted so as to oxidize the lime slurry that has absorbed $SO_2$ using the air supplied from an air supply line, not illustrated, to produce a gypsum slurry ($CaSO_4 \cdot 2H_2O$) and trap and remove $SO_2$ in a gypsum form. A temperature of the exhaust gas that has passed through the dust precipitator and/or the desulfurization device is, for example, approximately 160°C upstream of the heating and heat recovery device 10.

The heating device 20 is, for example, a duct burner provided downstream of the heating and heat recovery device 10 and upstream of the denitration device 30. The heating device 20 is constituted so as to heat an exhaust gas using cokes oven gas (COG) emitted from the same iron-making plant as a fuel and CO in the exhaust gas as a fuel for heating and a reducing agent up to 200°C to 270°C at which the exhaust gas can be preferably denitrated and send the exhaust gas to the denitration device 30.

The denitration device 30 is provided downstream of the heating device 20 and upstream of the heating and heat recovery device 10. The denitration device 30 is a fixed bed-type, movable bed-type, or fluidized bed-type denitration device. The denitration device 30 is constituted so as to include the catalyst described in the present specification therein and denitrate an exhaust gas using CO in the exhaust gas as a reducing agent.

According to the exhaust gas treatment catalyst, the method for producing an exhaust gas treatment catalyst, and the exhaust gas treatment system according to the present embodiment, it is possible to accelerate a CO denitration reaction and improve the NO conversion rate in a denitration treatment of an exhaust gas using an exhaust gas treatment catalyst as a denitration catalyst.

Examples

Hereinafter, the present invention will be more specifically described using test examples and comparative examples. The exhaust gas treatment catalyst, the method for producing an exhaust gas treatment catalyst, and the exhaust gas treatment system according to the present invention are not limited by the following description.

1. Preparation of exhaust gas treatment catalyst I

[Test Example 1] (outside of the scope of the invention)

In Test Example 1, silicon dioxide ($SiO_2$) having a specific surface area of 80 m$^2$/g was used as a carrier in a catalyst. In an impregnation and supporting step, this carrier (99.5g) was impregnated with an iridium (II) chloride solution (5.8 g) having a concentration of $8.6 \times 10^{-2}$% by weight, evaporated and solidified at 140°C for three hours, and then dried for one night at 110°C in the air.

Next, as a first firing step, the dried catalyst was fired in a firing furnace at 800°C for five hours, thereby obtaining a powder. Water (80% by mass) was added to the obtained powder (20% by mass), and the powder was crushed in a wet-type ball mill at 100 rpm for eight hours, thereby preparing a slurry for wash coating. A titanium oxide ($TiO_2$) honeycomb-shaped monolith base material (7.4 mm pitch, wall thickness: 1.15 mm) was immersed in this slurry to carry out wet coating and was dried at 120°C. A coating amount was set to 100 g per square meter of a surface area of the base material.

Next, as a second firing step, the dried catalyst was fired in a firing furnace at 500°C for five hours.

Next, as an activation step, the fired catalyst was activated by reducing iridium oxide at 600°C for one hour using hydrogen ($H_2$) having a concentration of 3% by volume as a reducing gas. The activated catalyst was used as an exhaust gas treatment catalyst of Test Example 1.

[Comparative Example 1]

In Comparative Example 1, a catalyst prepared in the same manner as in Test Example 1 except for the fact that silicon dioxide having a specific surface area of 300 $m^2$/g was used as the carrier was used.

2. Measurement of exhaust gas treatment performance I

Denitration performance and CO oxidation performance of Test Example 1 and Comparative Example 1 were measured in a laboratory scale. First, the denitration performance and the CO oxidation performance of the test example and the comparative example were measured using a tube-type communication reaction tester and gases having properties shown in Table 1. Fig. 3 illustrates a CO oxidation rate and a NO conversion rate of Test Example 1 with respect to a catalyst layer inlet temperature of the tester, and Fig. 4 illustrates a CO oxidation rate and a NO conversion rate of Comparative Example 1 with respect to a catalyst layer inlet temperature of the tester. The NO conversion rate (%) was calculated from (NO concentration at inlet-NO concentration at outlet)/NO concentration at inlet. The CO oxidation rate (%) was calculated from (CO concentration at inlet-CO concentration at outlet)/CO concentration at inlet. In the table, values of NO, CO, $SO_2$, $O_2$, and $CO_2$ were by volume dry. Meanwhile, in the table, AV represents an area rate (a gas flow rate/an all contact area in a denitration catalyst) , and a unit of AV is $Nm^3/m^2{\cdot}h$.

[Table 1]

Table 1 Gas properties

| NO | 160 ppm |
|---|---|
| CO | 8,000 ppm |
| $SO_2$ | 127 ppm |
| $O_2$ | 14.7% |
| $CO_2$ | 7.9% |
| $H_2O$ | 6.9% |
| AV | 17 $Nm^3/m^2{\cdot}h$ |

As illustrated in Fig. 3, as the catalyst layer inlet temperature increased, the NO conversion rate of Test Example 1 increased until near an inlet temperature of 250°C and then decreased until 360°C. This can be assumed to be because a denitration reaction preferentially progresses until a catalyst layer inlet temperature at which the NO conversion rate is maximized (in Fig. 3, near 250°C); however, at the above-described catalyst layer inlet temperature or higher, a CO oxidation reaction preferentially progresses, and thus, consequently, the maximum conversion rate of NO (maximum NO conversion rate) decreases. The maximum NO conversion rate of Test Example 1 was 60% or more in a case in which the inlet temperature was set to 250°C.

As illustrated in Fig. 4, as the catalyst layer inlet temperature increased, the NO conversion rate of Comparative Example 1 increased until near an inlet temperature of 270°C and then decreased until 360°C. This can be assumed to be because the denitration reaction preferentially progresses until a catalyst layer inlet temperature at which the NO conversion rate is maximized (in Fig. 4, near 270°C) ; however, at the above-described catalyst layer inlet temperature or higher, the CO oxidation reaction preferentially progresses, and thus, consequently, the maximum conversion rate of NO (maximum NO conversion rate) decreases. The maximum NO conversion rate of Comparative Example 1 was 50% or less in a case in which the inlet temperature was set to 270°C.

From the results, Test Example 1 in which the carrier having a specific surface area of 80 $m^2$/g was used was capable of improving the maximum NO conversion rate more than Comparative Example 1 in which the carrier having a specific surface area of 300 $m^2$/g was used by 10% or more.

3. Preparation of exhaust gas treatment catalyst II

[Test Examples 2 to 8]

In Test Example 2, a catalyst prepared in the same manner as in Test Example 1 except for the fact that titanium

dioxide ($TiO_2$) having a specific surface area of 21.3 $m^2$/g was used as a carrier was used. In Test Example 3, a catalyst prepared in the same manner as in Test Example 1 except for the fact that titanium dioxide having a specific surface area of 14.2 $m^2$/g was used as a carrier and the temperature in the activation step was set to 500°C was used. In Test Example 4, a catalyst prepared in the same manner as in Test Example 1 except for the fact that the carrier of Test Example 3 was used was used. In Test Example 5, a catalyst prepared in the same manner as in Test Example 1 except for the fact that the carrier of Test Example 3 was used and the temperature and the time in the activation step were set to 600°C and 20 hours was used. In Test Example 6, a catalyst prepared in the same manner as in Test Example 1 except for the fact that the carrier of Test Example 3 was used and the temperature and the time in the activation step were set to 600°C and 50 hours was used. In Test Example 7, a catalyst prepared in the same manner as in Test Example 1 except for the fact that the carrier of Test Example 3 was used and the temperature and the time in the activation step were set to 800°C and 20 hours was used. In Test Example 8 (outside of the scope of the invention), a catalyst prepared in the same manner as in Test Example 1 except for the fact that titanium dioxide having a specific surface area of 100 $m^2$/g was used as a carrier was used.

[Comparative Example 2]

In Comparative Example 2, a catalyst prepared in the same manner as in Test Example 1 except for the fact that the same carrier as Test Example 8 was used and the temperature and the time in the activation step were set to 800°C and 50 hours was used.

4. Measurement of exhaust gas treatment performance II

Subsequently, denitration performance and CO oxidation performance of the catalysts of Test Examples 2 to 8 and Comparative Example 2 were measured in the same manner as in Test Example 1 and Comparative Example 1. In Test Examples 2 to 8 and Comparative Example 2, the catalyst layer inlet temperatures at which the NO conversion rate was maximized were, similar to Test Example 1 and Comparative Example 1, in a range of 250°C to 270°C.

5. Measurement of crystallite diameter

Subsequently, for Test Examples 1 to 8 ad Comparative Examples 1 and 2, crystallite diameters of metallic iridium in the catalysts were calculated from a diffraction angle and a full width at half maximum of a diffraction peak of a [111] plane using an X-ray diffraction method in which a powder X-ray diffraction device was used (X-ray source: Cu $K_{\alpha1}$) using the Sherrer equation. In the following equation, D represents the crystallite diameter, K represents a constant (0.9), $\lambda$ represents a wavelength of the X-ray source (in the case of Cu, 1.5405 angstrom), $\beta$ represents the diffraction peak full width at half maximum (radian), and $\theta$ represents the diffraction angle.

$$D = K \cdot \lambda / \beta \cdot \cos\theta$$

5. Measurement of denitration performance

Denitration performance in the case of using the denitration catalysts of Test Examples 1 to 8 and Comparative Examples 1 and 2 was measured. Table 2 shows compositions of the carriers, the specific surface areas of the carriers in the impregnation and supporting step, the specific surface areas of the denitration catalysts after the production of the catalysts, the conditions of the activation step, the crystallite diameters of metallic iridium, and the maximum NO conversion rates regarding Test Examples 1 to 8 and Comparative Examples 1 and 2. Fig. 5 shows a relationship between the crystallite diameter of metallic iridium in the denitration catalyst and the maximum NO conversion rate regarding Comparative Examples 1 to 8 and Comparative Examples 1 and 2.

[Table 2]

Table 2 Specific surface area, crystallite diameter, and maximum NO conversion rate

| | Carrier | Specific surface area $(m^2/g)$ | | Conditions of activation step | | Crystallite diameter (nm) | Maximum NO conversion rate (%) |
|---|---|---|---|---|---|---|---|
| | Composition | Carrier | Catalyst | Temperature | Time | | |
| Test Example 1 | $SiO_2$ | 80 | 88.6 | 600°C | 1 h | 11.0 | 64 |
| Test Example 2 | $TiO_2$ | 21.3 | 19.4 | 600°C | 1 h | 13.5 | 71 |
| Test Example 3 | $TiO_2$ | 14.2 | 12.7 | 500°C | 1 h | 12.0 | 70 |
| Test Example 4 | $TiO_2$ | | | 600°C | 1 h | 17.3 | 65 |
| Test Example 5 | $TiO_2$ | | | 600°C | 20 h | 22.8 | 65 |
| Test Example 6 | $TiO_2$ | | | 600°C | 50 h | 21.6 | 68 |
| Test Example 7 | $TiO_2$ | | | 800°C | 20 h | 23.1 | 62 |
| Test Example 8 | $TiO_2$ | 100 | 68.3 | 600°C | 1 h | 24.6 | 60 |
| Comparative Example 1 | $SiO_2$ | 300 | 280 | 600°C | 1 h | 5.5 | 49 |
| Comparative Example 2 | $TiO_2$ | 100 | 68.3 | 800°C | 50 h | 27.0 | 51 |

As shown in Table 2 and Fig. 5, regarding the catalyst of Test Examples 1 to 8 and Comparative Examples 1 and 2, in Test Example 1 in which the specific surface area of the catalyst was 88.6 $m^2/g$ and the crystallite diameter of the catalyst was 11.0 nm, the maximum NO conversion rate was 64%. In Test Example 2 in which the specific surface area of the catalyst was 19.4 $m^2/g$ and the crystallite diameter of the catalyst was 13.5 nm, the maximum NO conversion rate was 71%. In Test Examples 3 to 7 in which the specific surface areas of the catalysts were 12.7 $m^2/g$ and the crystallite diameters of the catalysts were 12.0 nm, 17.3 nm, 22.8 nm, 21.6 nm, and 23.1 nm respectively, the maximum NO conversion rates were 70%, 65%, 65%, 68%, and 62% respectively. In addition, in Test Example 8 in which the specific surface area of the catalyst was 68.3 $m^2/g$ and the crystallite diameter of the catalyst was 24.6 nm, the maximum NO conversion rate was 60%. On the other hand, in Comparative Example 1 in which the specific surface area of the catalyst was 280 $m^2/g$ and the crystallite diameter of the catalyst was 5.5 nm, the maximum NO conversion rate was 49%. In addition, in Comparative Example 2 in which the specific surface area of the catalyst was 68.3 $m^2/g$ and the crystallite diameter of the catalyst was 27.0 nm, the maximum NO conversion rate was 51%.

From the results, it was determined that an upper limit value of the specific surface area of the catalyst is set to 100 $m^2/g$ or less in order to set the maximum NO conversion rate to 60% or more. In addition, from the results of Test Example 1, it was determined that the upper limit value of the specific surface area of the catalyst is preferably set to 90 $m^2/g$ or less. Furthermore, from the results of Test Examples 2 to 7 and Comparative Example 2, it was confirmed that, when the upper limit value of the specific surface area of the catalyst is set to 68 $m^2/g$ or less, the maximum NO conversion rate can be set to 62% or more. In addition, from the results of Test Examples 3 to 7, it was confirmed that, a lower limit value of the specific surface area of the catalyst is preferably 12 $m^2/g$ or more.

From the results, it was determined that the crystallite diameter of the catalyst is set to 10 nm or more and 25 nm or less in order to set the maximum NO conversion rate to 60% or more. In addition, from the results of Test Examples 1 to 6, it was confirmed that, when the crystallite diameter of the catalyst is set to 10 nm or more and 23 nm or less, it is possible to set the maximum NO conversion rate to 64% or more. Furthermore, from the results of Test Examples 2 to 6, it was confirmed that, when the crystallite diameter of the catalyst is set to 12 nm or more and 23 nm or less, it is possible to set the maximum NO conversion rate to 65% or more.

In addition, as shown in Table 2, regarding the production methods of Test Examples 1 to 8 and Comparative Examples 1 and 2, in Test Example 1 in which the specific surface area of the carrier in the impregnation and supporting step was set to 80 $m^2/g$, the maximum NO conversion rate was 64%. In Test Example 2 in which the specific surface area of the carrier was set to 21.3 $m^2/g$, the maximum NO conversion rate was 71%. In Test Examples 3 to 7 in which the specific surface area of the carrier was set to 14.2 $m^2/g$, the maximum NO conversion rates were 62 to 70%. In addition, in Test Example 8 in which the specific surface area of the carrier was set to 100 $m^2/g$, the maximum NO conversion rate was 60%. On the other hand, in Comparative Example 1 in which the specific surface area of the carrier was set to 300 $m^2/g$, the maximum NO conversion rate was 49%. In addition, in Comparative Example 2 in which the specific surface area of the carrier was set to 100 $m^2/g$, the maximum NO conversion rate was 51%. In addition, as an effect of the production of the catalyst, the specific surface area of the carrier tends to decrease when a catalyst is produced.

From the results, it was determined that the upper limit value of the specific surface area of the carrier in the impregnation and supporting step is set to 100 $m^2/g$ or less in order to set the maximum NO conversion rate to 60% or more. In addition, from the results of Test Examples 1 to 7, it was confirmed that, when the upper limit value of the specific surface area of the carrier in the impregnation and supporting step is set to 80 $m^2/g$ or less, it is possible to set the maximum NO conversion rate to 62% or more. In addition, from the results of Test Examples 3 to 7, it was confirmed that the lower limit value of the specific surface area of the carrier in the impregnation and supporting step is preferably 14 $m^2/g$ or more.

In addition, from the results, it was confirmed that, as the conditions of the activation step, the activation temperature is preferably 500°C or higher and 800°C or lower, and the activation time is preferably 1 hour or longer and 50 hours or shorter. In addition, it was confirmed that, as the carrier in the impregnation and supporting step, $TiO_2$ and/or $SiO_2$ can be preferably employed.

6. Measurement of CO oxidation capability

CO oxidation capabilities in the case of using Test Examples 1 to 8 and Comparative Examples 1 and 2 as a CO oxidation catalyst were measured. Regarding Test Examples 1 to 8 and Comparative Examples 1 and 2, compositions of the carriers, the specific surface areas of the carriers in the impregnation and supporting step, the specific surface areas of the catalysts after the production of the catalysts, conditions of the activation step, the crystallite diameters of metallic iridium, the CO oxidation rates in a case in which the catalyst layer inlet temperature was 260°C will be described. Fig. 6 illustrates a relationship between the crystallite diameters of metallic iridium in the catalysts in a case in which the catalyst layer inlet temperature was approximately 260°C and the CO oxidation rates regarding Test Examples 1 to 8 and Comparative Examples 1 and 2.

As illustrated in Fig. 6, in Test Example 1 in which the crystallite diameter of the catalyst was 11.0 nm, the CO oxidation rate was 80% or more. In addition, in Test Examples 2 to 6 in which the crystallite diameters of the catalysts were 13.5 nm, 12.0 nm, 17.3 nm, 22.8 nm, and 21.6 nm respectively, the CO oxidation rates were 85% or more. Meanwhile, in Test Examples 7 and 8 in which the crystallite diameters of the catalysts were 23.1 nm and 24.6 nm respectively, the CO oxidation rates were approximately 10%. In addition, in Comparative Example 1 in which the crystallite diameter of the catalyst was 5.5 nm, the CO oxidation rate was approximately 20%. In addition, in Comparative Example 2 in which the crystallite diameter of the catalyst was 27.0 nm, the CO oxidation rate was approximately 10%.

From the results, it was determined that the crystallite diameter of the catalyst is set to 10 nm or more and 23 nm or less in order to set the CO oxidation rate to 80% or more. In addition, from the results of Test Examples 2 to 6, it was confirmed that, when the crystallite diameter of the catalyst is set to 12 nm or more and 23 nm or less, the CO oxidation rate can be set to 85% or more.

In addition, from the results of Test Examples 1 to 6, it was confirmed that, as the conditions of the activation step, the activation temperature is preferably 500°C or higher and 600°C or lower, and the activation time is preferably 0.5 hours or longer and 50 hours or shorter. In addition, it was confirmed that, as the carrier in the impregnation and supporting step, $TiO_2$ and/or $SiO_2$ can be preferably employed.

Industrial Applicability

According to the exhaust gas treatment catalyst, the method for producing an exhaust gas treatment catalyst, and the exhaust gas treatment system of the present invention, it is possible to improve the NO conversion rate in denitration using CO as a reducing agent. In addition, it is possible to improve the CO oxidation rate in the oxidation of CO in an exhaust gas.

Reference Signs List

10   HEATING AND HEAT RECOVERY DEVICE
20   HEATING DEVICE
30   DENITRATION DEVICE

**Claims**

**1.** An exhaust gas treatment catalyst for denitrating an exhaust gas from a sintering furnace using CO as a reducing agent and for oxidizing CO, the exhaust gas treatment catalyst comprising:

a carrier that is titanium dioxide or silicon dioxide; and

an active metal including at least iridium supported by the carrier,

wherein a BET specific surface area of the catalyst is 100 $m^2/g$ or less, as calculated using a BET method, **characterized in that** a crystallite diameter of iridium in the catalyst is 12 nm or more and 23 nm or less, as calculated from a full width at half maximum of a diffraction peak obtained using an X-ray diffraction method using the Sherrer equation.

2. The exhaust gas treatment catalyst according to claim 1, wherein the specific surface area of the catalyst is 12 $m^2/g$ or more and 90 $m^2/g$ or less.

3. The exhaust gas treatment catalyst according to claim 1 or 2, wherein the carrier is titanium dioxide.

4. A method for producing an exhaust gas treatment catalyst according to any one of claims 1 to 3, the method comprising:

an impregnation and supporting step of impregnating a carrier with iridium to be supported thereby, wherein the carrier is titanium dioxide or silicon dioxide;

a firing step of firing the carrier supporting iridium; and

an activation step of activating the carrier by heating the carrier in a reducing gas atmosphere after the firing, wherein, in the activation step, a heating temperature is set to 500°C or higher and lower than 800°C, a heating time is set to 0.5 hours or longer and 50 hours or shorter, and hydrogen, carbon monoxide, or a gas mixture thereof is used as the reducing gas,

wherein a BET specific surface area of the carrier in the impregnation and supporting step is 14 $m^2/g$ or more and 22 $m^2/g$ or less, as calculated using a BET method.

5. The method for producing an exhaust gas treatment catalyst according to claim 4, wherein the specific surface area of the catalyst is 12 $m^2/g$ or more and 90 $m^2/g$ or less.

6. The method for producing an exhaust gas treatment catalyst according to claim 4 or 5, wherein, in the firing step, a firing temperature is set to 400°C or higher and 1,000°C or lower, and a firing time is set to five hours or longer and eight hours or shorter.

7. The method for producing an exhaust gas treatment catalyst according to any one of claims 4 to 6, wherein the carrier is titanium dioxide.

8. The method for producing an exhaust gas treatment catalyst according to any one of claims 4 to 7, wherein the reducing gas is hydrogen.

9. An exhaust gas treatment system for denitrating an exhaust gas from a sintering furnace using CO as a reducing agent and for oxidizing CO, the exhaust gas treatment system comprising:

a denitration device (30) including the exhaust gas treatment catalyst according to any one of claims 1 to 3;

a heating device (20) that is provided upstream of the denitration device (30) and heats the exhaust gas up to a predetermined temperature at the time of start-up; and

a heating and heat recovery device (10) that is provided upstream and downstream of the denitration device (30) and the heating device (20), heats the exhaust gas using a medium, and recovers heat of the exhaust gas flowing therein from the denitration device (30) using the medium.

10. An exhaust gas treatment system for using an amount of heat generated from oxidation of CO as a heat source of a denitration device, the exhaust gas treatment system comprising:

a denitration device (30) including a denitration catalyst;

a heating device (20) that is provided upstream of the denitration device (30) and heats the exhaust gas up to a predetermined temperature at the time of start-up;

a CO oxidation catalyst portion that is provided downstream of the denitration device (30) and includes the exhaust gas treatment catalyst according to any one of claims 1 to 3; and

a heating and heat recovery device (10) that is provided upstream and downstream of the denitration device (30), the heating device (20), and the CO oxidation catalyst portion, heats the exhaust gas using a medium, and recovers heat of the exhaust gas flowing therein from the denitration device (30) using the medium.

**Patentansprüche**

1. Abgasbehandlungskatalysator zur Denitrierung eines Abgases aus einem Sinterofen unter Verwendung von CO als Reduktionsmittel sowie zur Oxidation von CO, wobei der Abgasbehandlungskatalysator umfasst:

   einen Träger, bei welchem es sich um Titandioxid oder Siliziumdioxid handelt; und
   ein zumindest Iridium umfassendes aktives Metall, welches auf dem Träger geträgert ist,
   wobei die spezifische BET-Oberfläche des Katalysators 100 m$^2$/g oder weniger beträgt, wie unter Verwendung eines BET-Verfahrens berechnet,
   **dadurch gekennzeichnet, dass** der Kristallitdurchmesser des Iridiums in dem Katalysator 12 nm oder mehr und 23 nm oder weniger beträgt, wie aus der Halbwertsbreite eines unter Verwendung eines Röntgenbeugungsverfahrens und unter Verwendung der Sherrer-Gleichung erhaltenen Beugungspeaks berechnet.

2. Abgasbehandlungskatalysator gemäß Anspruch 1, wobei die spezifische Oberfläche des Katalysators 12 m$^2$/g oder mehr und 90 m$^2$/g oder weniger beträgt.

3. Abgasbehandlungskatalysator gemäß Anspruch 1 oder 2, wobei es sich bei dem Träger um Titandioxid handelt.

4. Verfahren zur Herstellung eines Abgasbehandlungskatalysators gemäß einem der Ansprüche 1 bis 3, wobei das Verfahren umfasst:

   einen Imprägnier- und Trägerungsschritt in Form des Imprägnierens eines Trägers mit hierauf zu trägerndem Iridium, wobei es sich bei dem Träger um Titandioxid oder Siliziumdioxid handelt;
   einen Brennschritt in Form des Brennens des Iridium trägernden Trägers; und
   einen Aktivierungsschritt in Form des Aktivierens des Trägers durch Erwärmen des Trägers in einer Reduktionsgasatmosphäre nach dem Brennen, wobei im Rahmen des Aktivierungsschritts die Erwärmungstemperatur auf 500°C oder mehr und weniger als 800°C eingestellt wird, die Erwärmungsdauer auf 0.5 Stunden oder mehr und 50 Stunden oder weniger eingestellt wird, und Wasserstoff, Kohlenmonoxid oder ein Gasgemisch hiervon als Reduktionsgas verwendet wird,
   wobei die spezifische BET-Oberfläche des Trägers im Rahmen des Imprägnier- und Trägerungsschritts 14 m$^2$/g oder mehr und 22 m$^2$/g oder weniger beträgt, wie unter Verwendung eines BET-Verfahrens berechnet.

5. Verfahren zur Herstellung eines Abgasbehandlungskatalysators gemäß Anspruch 4, wobei die spezifische Oberfläche des Katalysators 12 m$^2$/g oder mehr und 90 m$^2$/g oder weniger beträgt.

6. Verfahren zur Herstellung eines Abgasbehandlungskatalysators gemäß Anspruch 4 oder 5, wobei im Rahmen des Brennschritts die Brenntemperatur auf 400°C oder mehr und 1000°C oder weniger eingestellt wird und die Brenndauer auf fünf Stunden oder mehr und acht Stunden oder weniger eingestellt wird.

7. Verfahren zur Herstellung eines Abgasbehandlungskatalysators gemäß einem der Ansprüche 4 bis 6, wobei es sich bei dem Träger um Titandioxid handelt.

8. Verfahren zur Herstellung eines Abgasbehandlungskatalysators gemäß einem der Ansprüche 4 bis 7, wobei es sich bei dem Reduktionsgas um Wasserstoff handelt.

9. Abgasbehandlungssystem zur Denitrierung eines Abgases aus einem Sinterofen unter Verwendung von CO als Reduktionsmittel sowie zur Oxidation von CO, wobei das Abgasbehandlungssystem umfasst:

   eine Denitrierungsvorrichtung (30), welche den Abgasbehandlungskatalysator gemäß einem der Ansprüche 1 bis 3 umfasst;
   eine Heizvorrichtung (20), welche stromaufwärts der Denitrierungsvorrichtung (30) bereitgestellt ist und das Abgas zum Zeitpunkt der Inbetriebnahme auf eine vorbestimmte Temperatur erwärmt; und
   eine Heiz- und Wärmerückgewinnungsvorrichtung (10), welche stromaufwärts und stromabwärts der Denitrierungsvorrichtung (30) und der Heizvorrichtung (20) bereitgestellt ist, das Abgas unter Verwendung eines Mediums erwärmt, und Wärme des von der Denitrierungsvorrichtung (30) hierin einströmenden Abgases unter Verwendung des Mediums zurückgewinnt.

**10.** Abgasbehandlungssystem zur Verwendung der bei der Oxidation von CO erzeugten Wärmemenge als Wärmequelle für eine Denitrierungsvorrichtung, wobei das Abgasbehandlungssystem umfasst:

eine Denitrierungsvorrichtung (30), welche einen Denitrierungskatalysator umfasst;
eine Heizvorrichtung (20), welche stromaufwärts der Denitrierungsvorrichtung (30) bereitgestellt ist und das Abgas zum Zeitpunkt der Inbetriebnahme auf eine vorbestimmte Temperatur erwärmt;
einen CO-Oxidationskatalysatorbereich, welcher stromabwärts der Denitrierungsvorrichtung (30) bereitgestellt ist und den Abgasbehandlungskatalysator gemäß einem der Ansprüche 1 bis 3 umfasst; und
eine Heiz- und Wärmerückgewinnungsvorrichtung (10), welche stromaufwärts und stromabwärts der Denitrierungsvorrichtung (30), der Heizvorrichtung (20) und des CO-Oxidationskatalysatorbereichs bereitgestellt ist, das Abgas unter Verwendung eines Mediums erwärmt, und Wärme des von der Denitrierungsvorrichtung (30) hierin einströmenden Abgases unter Verwendung des Mediums zurückgewinnt.

## Revendications

**1.** Catalyseur de traitement de gaz d'échappement pour dénitrer un gaz d'échappement depuis un four de frittage en utilisant du CO en tant qu'agent réducteur et pour oxyder du CO, le catalyseur de traitement de gaz d'échappement comprenant :

un vecteur qui est du dioxyde de titane ou du dioxyde de silicium ; et
un métal actif comportant au moins de l'iridium supporté par le vecteur,
dans lequel une surface spécifique BET du catalyseur est 100 $m^2$/g ou moins, telle que calculée en utilisant une méthode BET,
**caractérisé en ce qu'**un diamètre de cristallite de l'iridium dans le catalyseur est 12 nm ou plus et 23 nm ou moins, tel que calculé à partir d'une largeur complète à mi-hauteur d'un pic de diffraction obtenu en utilisant une méthode de diffraction par rayons X en employant la formule de Scherrer.

**2.** Catalyseur de traitement de gaz d'échappement selon la revendication 1, dans lequel la surface spécifique du catalyseur est 12 $m^2$/g ou plus et 90 $m^2$/g ou moins.

**3.** Catalyseur de traitement de gaz d'échappement selon la revendication 1 ou 2, dans lequel le vecteur est du dioxyde de titane.

**4.** Procédé de production d'un catalyseur de traitement de gaz d'échappement selon une quelconque des revendications 1 à 3, le procédé comprenant :

une étape d'imprégnation et de support consistant à imprégner un vecteur avec de l'iridium pour qu'il soit supporté par celui-ci, dans lequel le vecteur est du dioxyde de titane ou du dioxyde de silicium ;
une étape de cuisson consistant à cuire l'iridium de support de vecteur ; et
une étape d'activation consistant à activer le vecteur par le chauffage du vecteur dans une atmosphère de gaz réducteur après la cuisson, dans lequel, à l'étape d'activation, une température de chauffage est définie à 500°C ou plus et moins de 800°C, un temps de chauffage est défini à 0,5 heure ou plus et 50 heures ou moins, et de l'hydrogène, du monoxyde de carbone ou un mélange gazeux de ceux-ci est utilisé en tant que le gaz réducteur, dans lequel une surface spécifique BET du vecteur à l'étape d'imprégnation et de support est 14 $m^2$/g ou plus et 22 $m^2$/g ou moins, telle que calculée en utilisant une méthode BET.

**5.** Procédé de production d'un catalyseur de traitement de gaz d'échappement selon la revendication 4, dans lequel la surface spécifique du catalyseur est 12 $m^2$/g ou plus et 90 $m^2$/g ou moins.

**6.** Procédé de production d'un catalyseur de traitement de gaz d'échappement selon la revendication 4 ou 5, dans lequel, à l'étape de cuisson, une température de cuisson est définie à 400°C ou plus et 1000°C ou moins, et un temps de cuisson est défini à cinq heures ou plus et huit heures ou moins.

**7.** Procédé de production d'un catalyseur de traitement de gaz d'échappement selon l'une quelconque des revendications 4 à 6, dans lequel le vecteur est du dioxyde de titane.

**8.** Procédé de production d'un catalyseur de traitement de gaz d'échappement selon l'une quelconque des revendications 4 à 7, dans lequel le gaz réducteur est de l'hydrogène.

**9.** Système de traitement de gaz d'échappement pour dénitrer un gaz d'échappement depuis un four de frittage en utilisant du CO en tant qu'agent réducteur et pour oxyder du CO, le système de traitement de gaz d'échappement comprenant :

un dispositif de dénitrification (30) comportant le catalyseur de traitement de gaz d'échappement selon l'une quelconque des revendications 1 à 3 ;
un dispositif de chauffage (20) qui est prévu en amont du dispositif de dénitrification (30) et chauffe le gaz d'échappement jusqu'à une température prédéterminée au stade du démarrage ; et
un dispositif de chauffage et de récupération de chaleur (10) qui est prévu en amont et en aval du dispositif de dénitrification (30) et du dispositif de chauffage (20), chauffe le gaz d'échappement en utilisant un milieu, et récupère une chaleur du gaz d'échappement s'écoulant dans celui-ci depuis le dispositif de dénitrification (30) en utilisant le milieu.

**10.** Système de traitement de gaz d'échappement pour utiliser une quantité de chaleur générée depuis une oxydation de CO en tant qu'une source de chaleur d'un dispositif de dénitrification, le système de traitement de gaz d'échappement comprenant :

un dispositif de dénitrification (30) comportant un catalyseur de dénitrification ;
un dispositif de chauffage (20) qui est prévu en amont du dispositif de dénitrification (30) et chauffe le gaz d'échappement jusqu'à une température prédéterminée au stade du démarrage ;
une partie de catalyseur d'oxydation de CO qui est prévue en aval du dispositif de dénitrification (30) et comporte le catalyseur de traitement de gaz d'échappement selon l'une quelconque des revendications 1 à 3 ; et
un dispositif de chauffage et de récupération de chaleur (10) qui est prévu en amont et en aval du dispositif de dénitrification (30), du dispositif de chauffage (20), et de la partie de catalyseur d'oxydation de CO, chauffe le gaz d'échappement en utilisant un milieu, et récupère une chaleur du gaz d'échappement s'écoulant dans celui-ci depuis le dispositif de dénitrification (30) en utilisant le milieu.

## FIG. 1

```
        START

IMPREGNATION AND SUPPORTING        S1

EVAPORATION AND DRYING             S2

        DRYING                     S3

     FIRST FIRING                  S4

      CRUSHING                     S5

    WASH COATING                   S6

    SECOND FIRING                  S7

     ACTIVATION                    S8

        END
```

# FIG. 2

## FIG. 3

## FIG. 4

## FIG. 5

## FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8309186 A
- JP 2005270821 A
- JP 2012061397 A